Europäisches Patentamt

(19) European Patent Office

Office européen des brevets

(11) Publication number: **0 044 197**
**A1**

## (12) EUROPEAN PATENT APPLICATION

(21) Application number: **81303136.6**

(22) Date of filing: **09.07.81**

(51) Int. Cl.³: **G 02 B 23/10**
**G 02 B 27/14, G 02 B 17/00**
**H 04 N 5/26**

(30) Priority: **10.07.80 GB 8022558**

(43) Date of publication of application:
**20.01.82 Bulletin 82/3**

(84) Designated Contracting States:
**DE FR**

(71) Applicant: **THE RANK ORGANISATION LIMITED**
**11 Hill Street**
**London W1X 8AE(GB)**

(72) Inventor: **Cook, Gordon Henry**
**68 Stoughton Road**
**Oadby Leicester(GB)**

(74) Representative: **Cullis, Roger et al,**
**c/o H.G. Amann Patents Manager The Rank**
**Organisation Limited 439 Godstone Road**
**Whyteleafe, Surrey, CR3 OYG(GB)**

(54) Multi-channel optical system.

㊼ An optical interface arrangement providing a coupling between a primary channel and a secondary channel in an optical system, comprising an insert prism (22) providing both a partially or fully reflecting surface (23) inclined at an angle of less than 45 degrees, preferably between 28 and 35 degrees, to the primary axis (20) and a second planar surface (24) normal to the primary axis firstly at which the secondary beam on the secondary axis (21) is transmitted from or to the inclined reflector (22) into or out of the primary channel and secondly at which the secondary beam is reflected to or from the inclined reflector in accordance with the laws of critical angle of internal reflection. With such an arrangement, the ratio of the thickness of the insert prism (22) to the width of the secondary beam (measured normal to the secondary axis) is less than unity, preferably lying between 0.9 and 0.55. The secondary beam enters or exits through the insert prism either at the said second mentioned surface (24), thence having a further internal reflection before its critical angle reflection at said surface (24), or through a further light-transmitting planar surface normal to the primary axis (20) or to the mirror image of said axis (20) as seen in the inclined reflector (22).

Fig.5

-1-

## Multi-Channel Optical System

This invention relates to a multi-channel optical system.

In an optical arrangement wherein an objective forms an image of an object on an image receptor, the information being transferred from object to image is contained within a channel centred on the primary axis of the objective.

In some circumstances it is necessary to extract some or all of this information and to relay it to a secondary receptor for analysis purposes such as viewfinding, focussing, light metering and the like. In other circumstances it may be necessary to inject additional information emanating from a secondary external source into the primary channel, and more especially to the primary image plane, in order to create a secondary diascope system.

The means of injecting into or extracting from the secondary channel may be switched into or out of its operative position in the primary channel by suitable mechanisms or it may contain partially reflective or colour selective surfaces so that both channels may be operative simultaneously.

Provision of such secondary channel injecting or extracting means is well-known. Prismatic and mirror arrangements have been used for the purpose, taking advantage of available air spaces in the primary channel for the coupling of a secondary channel. However, in applications such as cinematography and colour television the availability of such suitable air spaces rarely occurs and is difficult to provide. This arises from the fact that the camera objective in the primary channel is prevalently a zoom lens and because the rear conjugate distance of the objective is often fully occupied by shutter type mechanisms or by complex beam splitting devices.

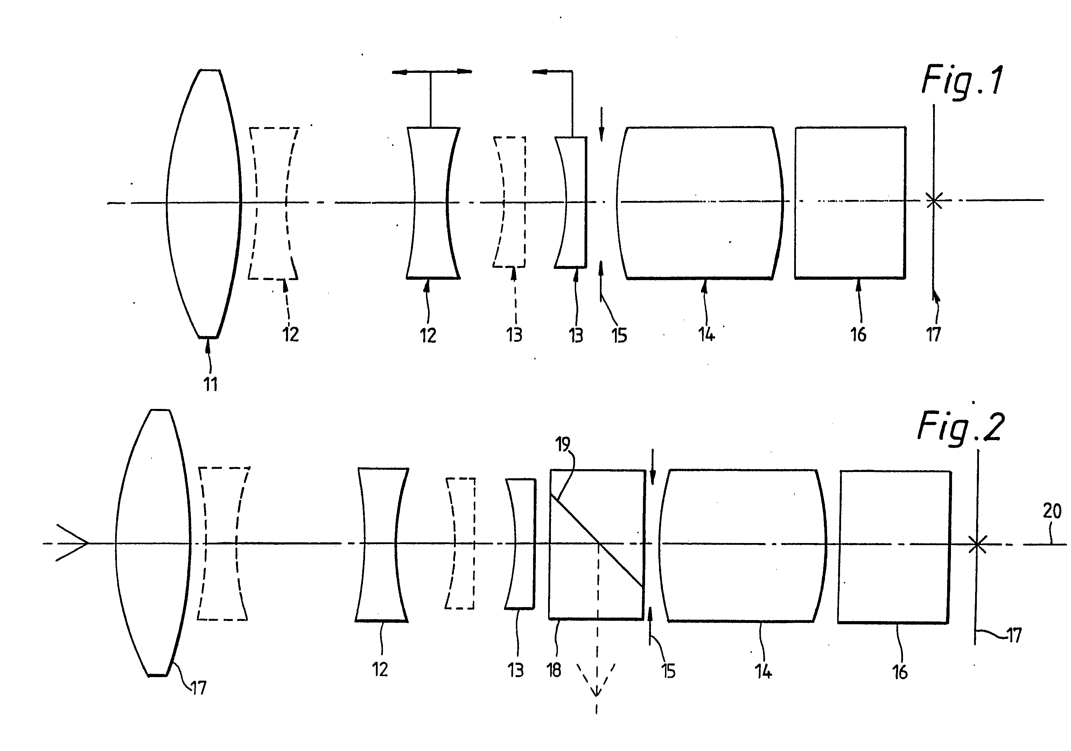

Thus, reference is now made to Figure 1 of the accompanying drawings, which diagrammatically depicts a typical zoom lens in a television camera, in which 11, 12, 13 and 14 are its basic optical members, 15 is its iris stop plane, 16 is a beam splitting prism component positioned in its rear conjugate and 17 is one of the image planes created by 16. Members 12 and 13 have axial movements to perform the zoom function and it is well known in the art that the minimum separations between 11 and 12, 12 and 13 and 13 and 15 must be reduced to the smallest practicable values if the objective is to have wide specification, minimum overall dimensions and high
levels of performance. The beam splitting component 16
is normally mounted within the camera and fully occupies
the rear conjugate distance of the objective. The
dimensions of 16 are normally such that the rear
conjugate distance of the objective has to be several
times the value of its minimum focal-length and it is
well known that further increase of this distance impairs
the optimisation of the design. For similar reasons the
separation between 15 and 14 is desirably restrained to
the smallest practical value. It will be seen, therefore,
that sufficient space for the coupling of a secondary
channel is not normally available and that its provision
will only impair the function of the primary channel.

Figures 2, 3 and 4 of the drawings, employing the
same reference numerals as Figure 1, show how additional
space has to be provided, to the detriment of the primary
channel, to accommodate known types of secondary channel
insertion means 18 for various applications. In
particular, it will be seen that the reflecting surface
19 of the insertion means 18 makes an angle of $45^{\circ}$ with
the primary axis 20 and thus the thickness T of the
insertion means 18 measured along the optical axis 20
cannot be less than the width B of the light beam transmitted along the secondary channel 21. In many cases some further increase in thickness will be necessary to permit the chamfering of knife-edge apices of the prism elements. A prismatic insertion means 18 generally as shown in Figures 2 to 4 is referred to herein as an insert prism.

It is an object of the present invention to provide means of improved configuration for coupling a secondary channel to a primary channel in an optical system, whereby the disadvantage of providing additional space in the primary channel is reduced or minimised.

According to the invention, there is provided an optical arrangement providing an interface between a primary image forming channel and a secondary channel, wherein the interface comprises an insert prism having a planar partial or fully reflecting surface inclined to a normal to the primary axis at an angle of less than 45 degrees and a second planar surface substantially normal to the direction of the primary axis, at which second surface firstly the secondary beam from or to the inclined reflecting surface is transmitted into or out of the primary channel and secondly the secondary beam to or from the inclined reflecting surface is reflected in accordance with the laws of critical angle of internal reflection, the thickness of the insert prism in the direction of the primary axis being less than 0.9 times the width of the secondary beam (measured normal to the secondary axis) transmitted through said prism. Although, for example from Swiss Patent No. 452218, the concept is known in a colour separating prism of using an air/glass face both as a primary beam transmitter and as a secondary beam internal reflector, the present invention for the first time provides a coupling prism which can be accommodated in such a restricted axial distance along the primary axis.

The invention will now be exemplified with reference to the accompanying drawings, wherein:

Figure 1 diagrammatically depicts a zoom lens optical system in a television camera;

Figures 2 to 4 show various known means for coupling a secondary channel to the primary channel in such an optical system;

Figure 5 diagrammatically shows one embodiment of interface in accordance with the invention;

Figures 6 to 8 respectively show three further embodiments of the invention;

Figure 9 shows the application of the invention to the zoom lens optical system of Figure 1; and

Figure 10 shows a further modification of the invention.

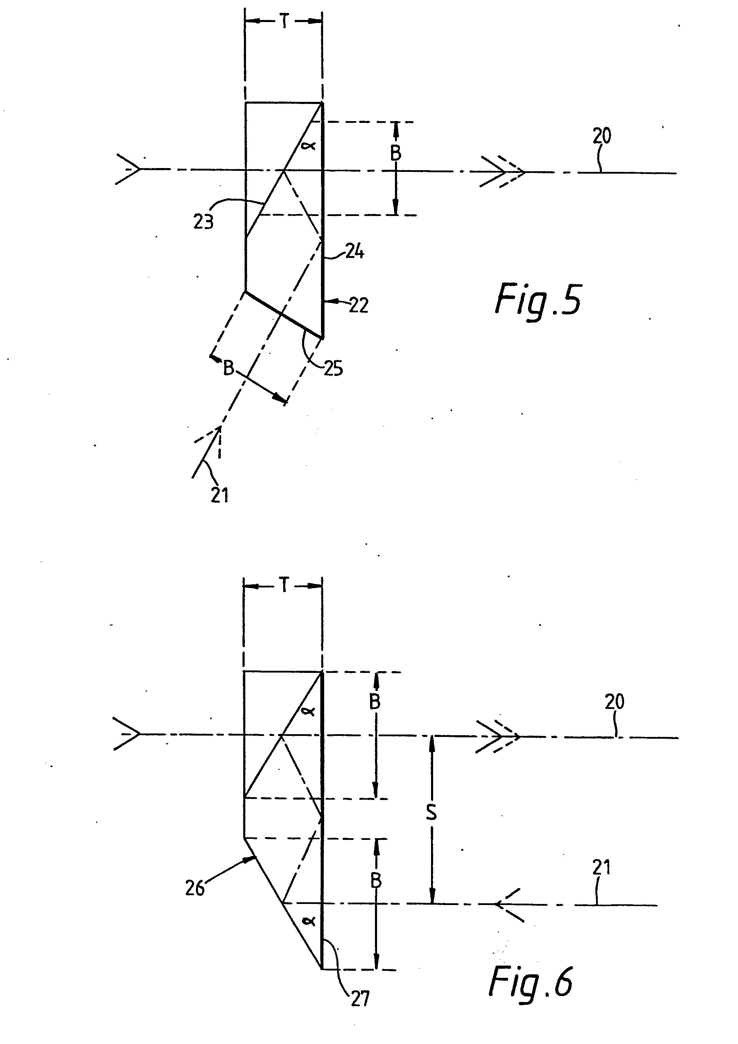

In the example of the invention shown in Figure 5, the beam on the secondary axis 21 suffers two reflections in passing through an insert prism 22. When this insert prism 22 is permanently positioned on the primary axis 20, the surface 23 inclined to the primary axis by the

angle α is partially or selectively reflective. When the insert prism 22 is switched in and out of position, the smaller triangular prism element 23 can be dispensed with and the inclined surface 23 can be made fully reflective.

The angle α is less than 45°, preferably less than 35°, and the width B of beam transmitted along the secondary axis is set by the value of the thickness T of the insert prism 22 and the angle α by the relationship:-

$$T = B \sin 2\alpha$$

In order to avoid unwanted optical aberrations of an asymmetrical nature the external polished transmitting surfaces 24 and 25 of the insert prism 22 are substantially normal to the direction of the primary and secondary axes, 20 and 21 respectively.

One of the two internal reflections, that at the surface 24, relies on fulfilling the laws of critical angle of reflection and demands that this polished surface 24 acts simultaneously as a transmitter and as an internal reflector. The critical angle of reflection condition is met when $\sin 2\alpha > \frac{1}{N}$, where N is the mean refractive index of the material of the prism. The minimum value of α, however, is set at a higher value, say above 28°, for the purpose of avoiding additional and unwanted reflection of the secondary beam and in practical embodiments the angle α will approximate to 30°.

When α = 30°, then $\frac{T}{B}$ = 0.866

Minor variations of this geometrical configuration arise according to the collimation, convergence or divergence of the secondary beam passing through the insert prism.

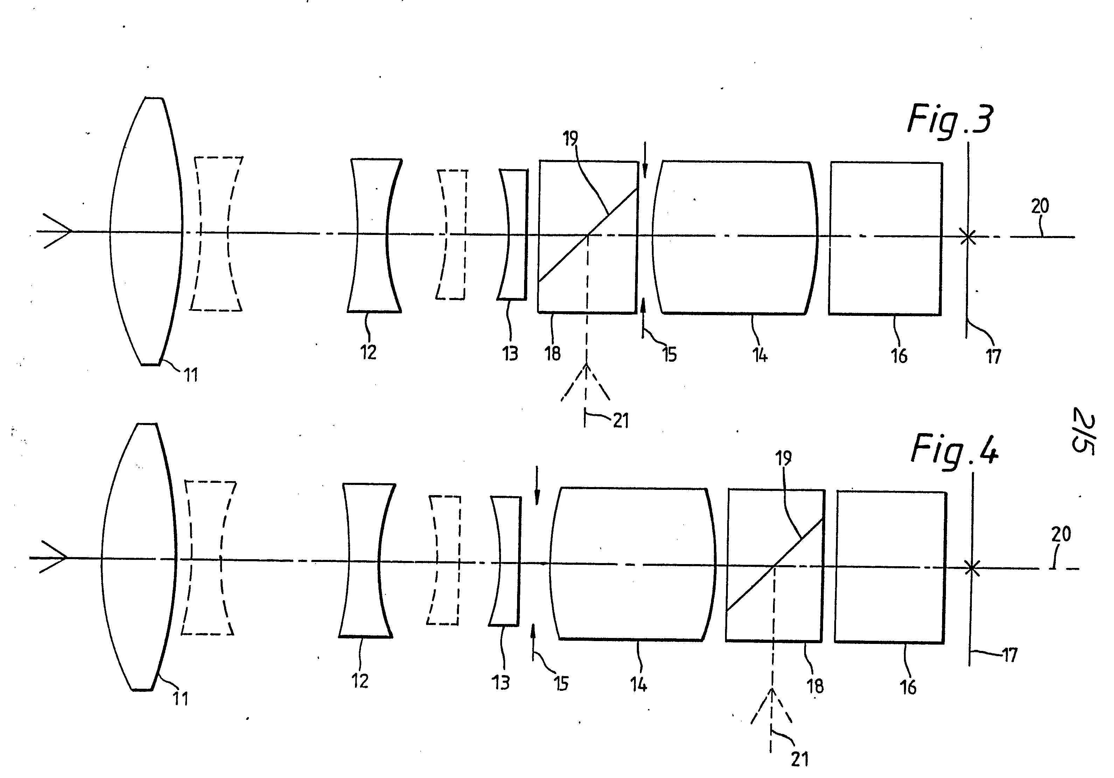

The example shown in Figure 5 can be used instead of the insert prisms 18 shown in Figures 3 and 4 and when reversed left to right can replace the prism 18 shown in Figure 2.

That part of the secondary axis 21 which is external to the primary channel 20 may define the positions of other optical components such as relay objectives, image detectors or illumination means for projecting diascope information and additional reflectors of known type may be incorporated to fold this part of the secondary axis to optimise the overall configuration of lay-out.

The reduced T/B ratio of about 0.86 in the example shown in Figure 5 is of significant advantage and leads to further development of the invention in which much smaller ratios can be achieved.

The example shown in Figure 6 illustrates an insert prism 26 within which the beam on the secondary axis 21 suffers three reflections. The width of beam transmitted along the secondary axis is now equally limited at the entrance and exit faces and the T/B ratio is further reduced in accordance with the relationship:-

$$T = B \tan \alpha$$

This arrangement retains the essential condition that one polished surface, the surface 27, acts simultaneously as a transmitter and as an internal reflector. The conditions fulfilling the laws of critical angle of reflection and the other geometrical considerations described in the first example also apply to this example.

When $\alpha = 30^{\circ}$, then $T/B = 0.577$

The arrangement of Figure 6 also has the advantage that the external secondary axis 21 is parallel to the primary axis 20. The inter-axial separation S becomes important for geometrical configuration of layout purposes and is defined by the relationship:-

$$S = T \tan 2\alpha$$

Again, when $\alpha = 30^{\circ}$, then $S = 1.732\ T$ .

It will be seen that the dimension S can be increased by

-9-

increasing $\alpha$ with some sacrifice of the $T/_B$ ratio.

When $\alpha = 35^o$, then $T/_B = 0.7$ and $S = 2.747$ T.

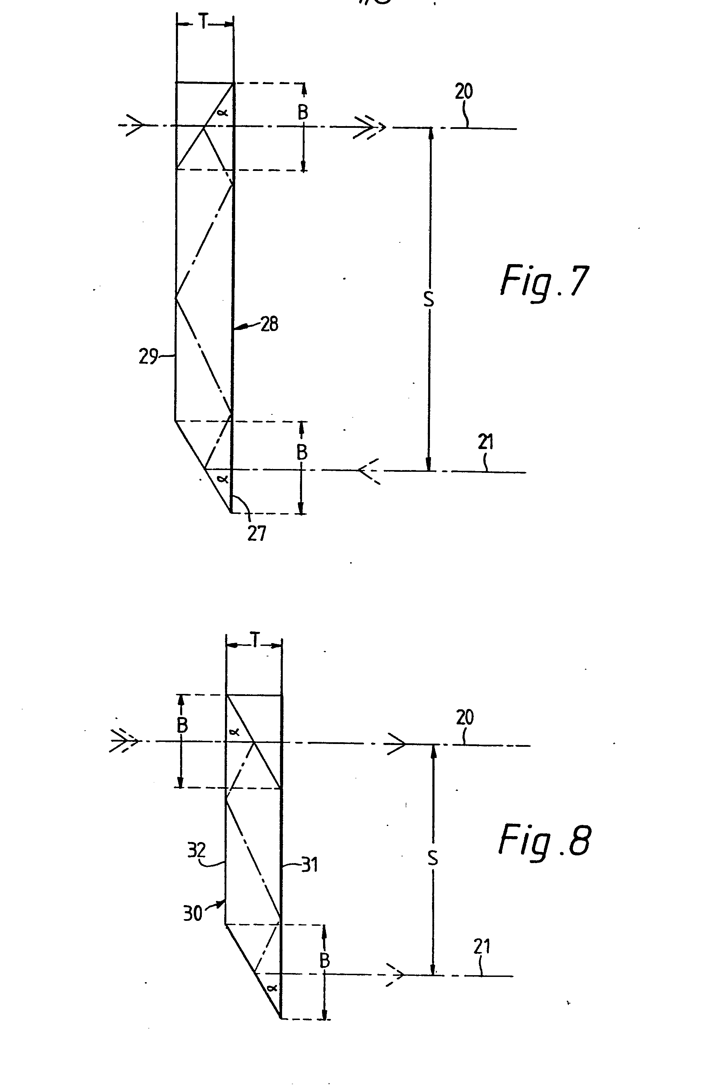

In cases where the overall configuration of layout demands an unusually large value of S it may be found that this increased value of $\alpha$ results in an undesirable increase in the $T/_B$ ratio. It is then preferable to utilise a further development of the invention in which the beam on the secondary axis 21 suffers five reflections in the insert prism. An example of this arrangement is shown in Figure 7, wherein the insert prism is designated 28. Compared with the arrangement of Figure 6, there is now an additional polished surface, the surface 29, at which the laws of internal critical angle of reflection are fulfilled. In all other respects the geometrical considerations previously described are fulfilled and the $T/_B$ ratio dependence on the angle $\alpha$ remains the same as that in Figure 6. However, the inter-axial distance is considerably increased according to the relationship:-

$$S = 3T \tan 2\alpha.$$

When $\alpha = 30^o$, then $T/_B = 0.577$ and $S = 5.196T$ .

The examples shown in Figures 6 and 7 can be used to replace the known insertion means 18 shown in either of Figures 3 and 4.

In order to replace the known arrangement of Figure 2 for extracting information from the primary channel 20 a different embodiment of the invention may be used. This is shown in Figure 8.

In this example the beam on the secondary axis 21 suffers four reflections during its passage through the insert prism 30 and there are now two polished surfaces 31, 32 acting simultaneously as a transmitter and obeying the laws of critical angle of reflection internally. In all other respects the geometrical considerations previously described are fulfilled and the $T/_B$ ratio dependence on the angle $\alpha$ remains the same as that in the examples illustrated by Figures 6 and 7. The distance S between the primary and secondary axis is in accordance with the relationship:-

$$S \; = \; 2 \, T \tan 2 \, \alpha$$

When $\alpha = 30^\circ$, then $T/_B = 0.577$ and $S = 3.464T$ .

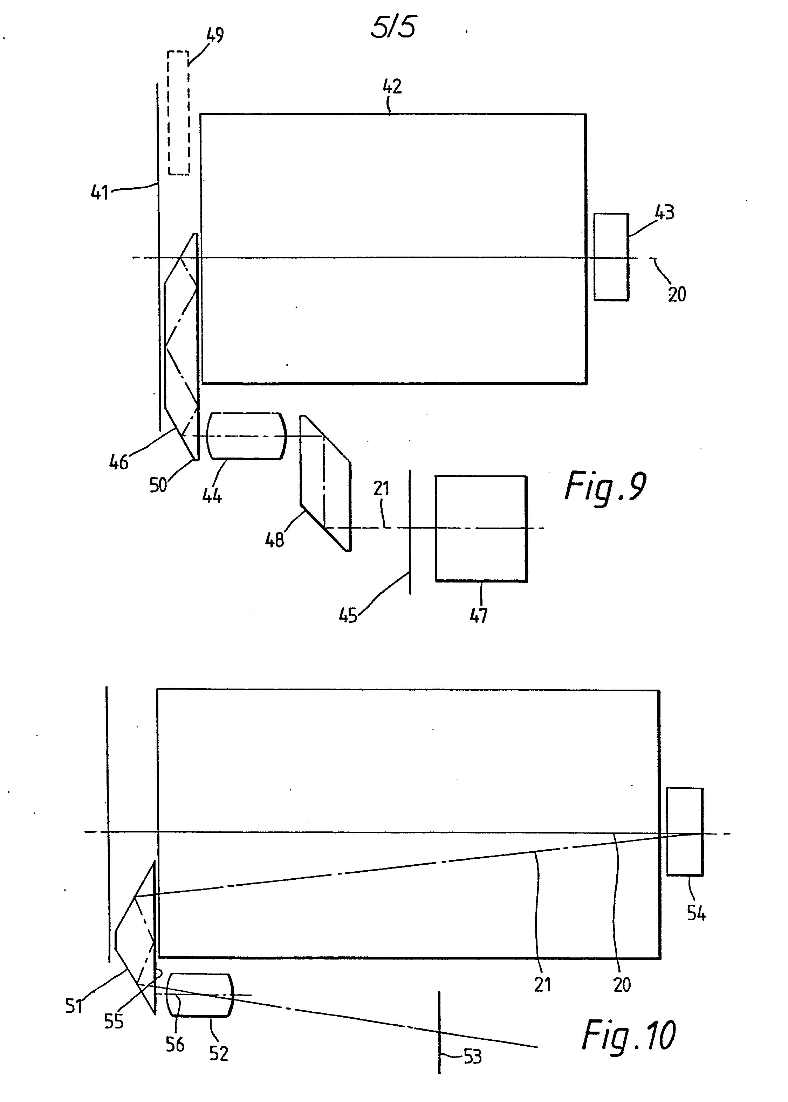

A practical application of the invention is shown in Figure 9, where 41 is the rear of a zoom objective in the primary channel 20, 42 is a beam splitting prism in its rear conjugate distance and 43 is its primary image plane. The relay objective 44 projects an image of the secondary object plane 45 to the primary image plane 43 via an insert prism 46. The lamp house 47 includes a light source and lens system appropriately illuminating the secondary object plane 45 and a rhomboid prism 48 folds the secondary axis 21, conveniently to suit the configuration of layout.

The insert prism 46 is similar to the example shown in Figure 7 and it is moved into and out of the operation position shown by mounting it within the thickness of a rotating turret wheel carrying a plurality of turret filters 49.

When the primary channel 20 is in use the turret wheel is rotated to bring one of the turret filters 49 on to the primary axis and the insert prism 46 moves to an inoperative position. When the secondary channel 21 is in use the turret wheel is rotated to bring the insert prism 46 into its operative position and the primary channel 20 is obscured. Since a turret wheel of filters including an obscuration position is an essential component of the type of application described, it is apparent that the ability to mount the insert prism 46 within the thickness of the turret wheel avoids any necessity to provide additional air space along the primary axis 20 and well demonstrates the advantage of the invention.

In the arrangement of Figure 9:

$\alpha$ = 30°

T = 5.5 mm

S = 28.579 mm

B = 9.526 mm

. Small chamfers 50 at the apices of the insert prism 46 may be desirable for practical purposes. These restrict the transmitted beam width by a small amount but the value remains large relative to T and is sufficient at one end to accept the beam diameter emanating from the relay objective 44 and at the other to accept its angular field of view.

Other modifications of the described arrangements may be utilised to suit particular applications, and small departures from the symmetry of the insert prism may be adopted to suit the envelope of image forming beams of light passing through it. Wide choice of material exists for the prism and where its path length is undesirably long the use of high refractive index material has the effect of shortening the equivalent air path.

It is to be noted, in particular, that it is not essential for the secondary axis 21 on the one side of the inclined reflector to be coincident with the primary axis 20. In some applications the arrangement shown in

Figure 10 may be utilised as an alternative to that shown in Figure 9. The insert prism 51 has three internal reflections and a shorter path length. The relay objective 52 utilises an asymmetrical field in relaying an image of the secondary object 53 to the primary image 54. The transmitting surface 55 of the insert prism 51 and the secondary object plane 53 are normal to the direction of the primary axis 20 and to the optical axis 56 of the relay objective 52.

Claims

1.    An optical arrangement providing an interface
between a primary image forming channel and a secondary
channel, wherein the interface comprises an insert prism
having a planar partial or fully reflecting surface
inclined to a normal to the primary axis at an angle of
less than 45 degrees and a second planar surface substantially normal to the direction of the primary axis,
characterised in that the secondary beam from or to the
inclined reflecting surface (23) is both transmitted into
or out of the primary channel at said second surface (24)
and reflected at said second surface (24) in accordance
with the laws of critical angle of internal reflection,
and in that the thickness (T) of the insert prism (22) in
the direction of the primary axis is less than 0.9 times
the width (B) of the secondary beam (measured normal to the
secondary axis) transmitted through said prism.

2.    An optical arrangement according to claim 1,
characterised in that the said inclined reflecting surface
is inclined to the normal to the primary axis at an angle
lying between 28 degrees and 35 degrees.

3.    An optical arrangement according to claim 1 or
claim 2, characterised in that the ratio of the thickness
of the insert prism to the width of the secondary beam lies between 0.9 and 0.55.

4.    An optical arrangement according to any of claims
1 to 3, characterised in that the insert prism has an
additional planar surface, substantially normal to the
primary axis or to the mirror image of said primary axis
seen in the inclined reflecting surface, for light transmission of the secondary beam at entry to or exit from the
insert prism.

5.    An optical arrangement according to claim 5,
characterised in that the secondary axis at entry to or
exit from the insert prism lies parallel to and spaced
from the primary axis.

6.    An optical arrangement according to any of claims
1 to 5, characterised in that the secondary beam undergoes
at least three internal reflections within the insert prism,
and in that at least one such further reflection is in
accordance with the laws of critical angle of internal
reflection.

7.    An optical arrangement according to any of claims
1 to 6, characterised in that the said inclined reflecting
surface is fully reflective and the insert prism is
movably mounted to switch into and out of its operative
position.

8.    An optical arrangement according to any of claims
1 to 7, characterised in that the said inclined reflecting surface comprises an interface between two elements of said insert prism and is partially or selectively reflective.

9.    An optical arrangement according to any of claims 1 to 8, forming part of the optical system of a television camera having a zoom objective and a beam splitter to the rear thereof, characterised in that the insert prism is interposed in the zoom lens in front of a stationary rear member thereof or between said zoom lens and said beam splitter.

10.    An optical arrangement according to claim 9, characterised in that the insert prism occupies one turret position in a turret of filters adapted to be selectively interposed between the zoom objective and the beam splitter.

Fig.1

Fig.2

0044197

Fig.3

Fig.4

2/5

0044197

Fig.5

Fig.6

Fig.7

Fig.8

*Fig.9*

*Fig.10*

# 0044197

**European Patent Office**

**EUROPEAN SEARCH REPORT**

Application number
EP 81 30 3136

| Category | Citation of document with indication, where appropriate, of relevant passages | Relevant to claim |
|---|---|---|
| | **DOCUMENTS CONSIDERED TO BE RELEVANT** | |
| | CH - A - 452 218 (S.O.P.E.M.) | 1 |
| | ✱ page 1, lines 35–38; page 2, lines 1-25; figure 1 ✱ | |
| | — | |
| | DE - B - 2 205 325 (LICENTIA) | 1 |
| | ✱ column 4, lines 5-17; figure 1 ✱ | |
| | — — | |
| A | DE - C - 680 766 (E. LEITZ) | 1 |
| | ✱ page 1, lines 31-53; figures ✱ | |
| | ————— | |

**CLASSIFICATION OF THE APPLICATION (Int. Cl.³)**

G 02 B 23/10
27/14
17/00
H 04 N 5/26

**TECHNICAL FIELDS SEARCHED (Int. Cl.³)**

G 02 B 23/10
17/00
27/14
5/04
H 04 N 5/26

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search The Hague | Date of completion of the search 24-09-1981 | Examiner PFAHLER |
|---|---|---|

EPO Form 1503.1 06.78